# EUROPÄISCHE PATENTSCHRIFT

(11) **EP 1 602 686 B1**
(45) Veröffentlichungstag und Bekanntmachung des Hinweises auf die Patenterteilung: **01.10.2008**
(21) Anmeldenummer: 04405348.6
(22) Anmeldetag: 04.06.2004
(51) Int. Cl.: C08L 23/00, C08L 23/16, C08L 23/10, H01B 3/44, H01B 3/28, C08K 3/00

(54) **Polymermischung insbesondere für ein strangförmiges Produkt**
Polymer composition in particular for elongated product
Composition polymérique notamment pour un produit allongé

(43) Veröffentlichungstag der Anmeldung: 07.12.2005
(73) Patentinhaber: Studer Draht-und Kabelwerk AG, 4658 Däniken (CH)
(72) Erfinder: Gradwohl, Heiner Dr., 5012 Schönenwerd (CH); Grossmann, Franz, 5013 Niedergösgen (CH); Almos, Zeley, 5430 Wettingen (CH); Vögele, Anton, 5014 Gretzenbach (CH); Lorenz, Catrin, 4658 Däniken (CH)
(74) Vertreter: Luchs, Willi

(56) Entgegenhaltungen:
- EP-A- 0 993 002
- EP-A- 1 416 502
- US-A- 5 597 867
- PATENT ABSTRACTS OF JAPAN Bd. 0161, Nr. 83 (C-0936), 6. Mai 1992 (1992-05-06) & JP 4 025539 A (SHOWA DENKO KK), 29. Januar 1992 (1992-01-29)

## Beschreibung

Die Erfindung betrifft eine Polymermischung für ein strangförmiges Produkt, wobei dieses Polymer halogenfrei, flammwidrig und ölbeständig ist.

Für solche gattungsmässigen Mischungen, welche den Anforderungen von Flammwidrigkeit, Ölbeständigkeit und Halogenfreiheit gerecht werden sollen, wurden lange Zeit - wie aus der Druckschrift EP-A-0 392 147 zu entnehmen ist - Polymermischungen mit einem hohen Anteil an Polyurethan verwendet. Dieses Material ist jedoch teuer und nicht in allen Eigenschaften vorteilhaft, wie zum Beispiel in der beschränkten Säure- und Laugenbeständigkeit oder auch in der Zugfestigkeit beispielsweise bei Anwendung in Elektrokabeln.

Bei einer Mischung gemäss der Druckschrift EP-A-0 993 002, die als Mantelmaterial für elektrische Kabel dient, die überdies insbesondere halogenfrei, unvernetzt, sehr leicht verformbar, hitze- und ölbeständig sein soll, ist eine Zusammensetzung vorgesehen aus einem Polymer mit 100 Gewichtsanteilen, mit
- bis 90 Gewichtsanteilen eines thermoplastischen Elastomer mit Polyolefin-Hartsegmentes und eines Weichsegmentes in einem Molekül,
- 5 bis 25 Gewichtsprozenten eines Copolymer mit Ethylen und einer auf Vinyl basierenden Verbindung, welche eine oder mehrere Carbonyl-Gruppen enthält,
- und höchstens ungefähr 25 Gewichtsprozenten von Polyolefin mit einer Kristallinität von wenigstens 55 %, und
30 bis 200 Gewichtsanteile von wenigstens einem Metallhydroxid, von welchem die Oberfläche nicht mit Talgsäure oder dergleichen behandelt ist.

In der Druckschrift US-A-5 597 867 ist ein thermo-plastisches Elastomer geoffenbart, welches auf Gummibasis zusammengesetzt ist. Dieses thermoplastische Elastomer soll mitunter ein thermoplastisches Harz aufweisen, das ein kristallines Olefin-Harz ist. Zudem weist es wenigstens einen verträglichen Anteil auf, welcher hergestellt ist durch eine Schmelzreaktion eines Polypropylen-Harzes mit Epoxid als wesentlicher Anteil mit wenigstens einem Mischanteil der Gruppe enthaltend ein Maleinat-Anhydrid-Harz mit einem Malein-Anhydrid-Anteil Im Molekül. Es sind somit in diesem thermoplastischen Elastomer auf Gummibasis mit einem dementsprechenden Gummianteil unter anderen Komponenten ein Olefin-Harz und ein Malein-Anhydrid enthalten. Es ist hierbei nicht erwähnt, dass diese letztgenannten Komponenten als Verträglichkeitsvermittler bzw. Haftvermittler dienen.

In dem Abstract JP-A-4025539 ist ein thermoplastisches Elastomer beschrieben, welches aus Gummi-Anteilen in einer thermoplastischen Zusammensetzung besteht, die in einer dynamischen Wärmebehandlung aus einer Zusammensetzung aus polyolefinem Harz, einem spezifischen Gummianteil und einem spezifischen Graft-Copolymer entsteht. Es ist zwar ein polyolefines Harz vorgesehen, aber es ist in der Mischung nicht ein thermoplastisches Olefin-Elastomer und ein gepfropftes Polyolefin enthalten.

In der Druckschrift EP-A-1 416 502 indes ist ein Isolationsmaterial für Elektrokabel geoffenbart, bei welchem eine vernetzte, halogenfreie flammgeschützte Kunststoffmischung verwendet wird, welche aus Polyethylen mit unterschiedlichen Dichten, einem Flammschutzmittel, einem Kupplungsmittel und einem Stabilisatorsystem zusammengesetzt ist. Es werden dabei als Basispolymere ausschliesslich Polyethylene (HDPE) verwendet. Bei dem geoffenbarten Kupplungsmittel geht es darum, die Polymer-Matrix mit dem Flammschutzmittel chemisch zu verbinden, wobei als Kupplungsmittel Polyolefin-Terpolymere oder Polyolefin-Pfropfpolymere in Frage kommen. Dieses Isolationsmaterial ist aber nicht ölbeständig.

Ausgehend von diesen bekannten Mischungen ist der vorliegenden Erfindung die Aufgabe zugrundegelegt worden, eine Mischung für ein strangförmiges Produkt nach der eingangs erwähnten Gattung zu schaffen, welche eine einfache und kostengünstige Erzeugung mit den geforderten Eigenschaften guter Flammwidrigkeit, Ölbeständigkeit und Halogenfreiheit ermöglicht. Mit dieser Mischung soll ferner eine gute Verformbarkeit und Säure-Laugebeständigkeit des daraus hergestellten Produktes erzielt werden.

Die Aufgabe wird erfindungsgemäss durch die Merkmale des Anspruches 1 gelöst.

Thermoplastische Olefin-Elastomere setzen sich üblicherweise aus einer kontinuierlichen (thermoplastischen) Phase (z.B. Polypropylen PP), und einer diskontinuierlichen dispersen Phase (z.B. EPDM oder XEPDM) zusammen. Diese Produkte werden unter verschiedenen Markennamen (z.B. Santoprene, Uniprene usw.) angeboten. Flammwidrige Mischungen werden bislang mit halogenhaltigen Flammschutzmitteln vermarktet.

Der Grund liegt darin, dass die Reissdehnung beim Einsatz halogenfreier Flammschutzmittel und den erforderlichen hohen Füllgraden massiv sinkt (kleiner 100 %). Gerade in der Kabelindustrie werden jedoch für Mäntel und Isolationen Werte grösser 125 % gefordert. Für z.B. tiefziehfähige Folien werden noch höhere Werte gefordert.

Durch geeignete Auswahl der Polymere (Art und Vernetzung der dispersen Phase), Auswahl der Verträglichkeitsvermittler, Auswahl und Menge des Flammschutzes usw. ist es mit der Erfindung gelungen, neben den guten Eigenschaften betreffend Flammwidrigkeit (z.B. nach IEC60332), der Halogenfreiheit und der Ölbeständigkeit (z.B. nach IEC 60811) auch die Reissdehnung auf hohem Niveau zu erhalten.

Mit dieser Mischung kann ein Strangprodukt mit sehr guten Eigenschaften in kostengünstiger Weise hergestellt werden.

Die erfindungsgemässe Mischung soll als Ausgangsmaterial für insbesondere durch Extrudieren hergestellte strangförmige Produkte dienen, wie zum Beispiel Elektrokabelkanäle, Schutzrohre von elektrischen Kabeln, Isolationsschichten von elektrischen Leitern oder Elektrokabelmäntel.

Die Mischung besteht hierbei aus einem Polymer, wobei dasselbe ― wie bereits einleitend erwähnt ist - halogenfrei, flammwidrig und annähernd ölbeständig sein soll. Ausserdem soll das mit dieser Mischung erzeugte Strangprodukt gut verformbar sein, wobei dies je nach Endprodukt variabel gehalten werden kann. Die Mischung soll gegebenenfalls auch eine gute Säurebeständigkeit aufweisen.

Erfindungsgemäss ist in der Mischung zumindest eine Polypropylen/XEPDM-Mischung und zusätzlich ein gepfropftes Polyolefin als Verträglichkeitsvermittler enthalten, wie in Anspruch 1 definiert ist.

Die Grundrezeptur einer nach der Erfindung erzeugten PolymerMischung kann in Gewichtsprozenten wie folgt gebildet sein:

| | |
|---|---|
| 20 bis 60 % | Polypropylen/XEPDM |
| 40 bis 70 % | Metallhydroxid |
| 01 bis 30 % | maleinsäureanhydrid oder mit Carboxylsäure gepfropftes Polyolefin oder maleinsäureanhydid-gepfropftes Polyolefin-Copolymer oder Polyolefin-Maleinsäure-Copolymer |
| 01 bis 10 % | Additiv |

Die Mischung ist im Rahmen der Erfindung aus Fertigkomponenten gebildet, wie zum Beispiel aus Polymeren, dem Polypropylen-XEPDM-Verschnitt und aus Füllstoffen. Dies vereinfacht die Erstellung der Mischung.

Bei dem mit 1 bis 10 Gewichtsprozenten vorgesehenen Additiv können je nach Bedarf zum Beispiel Alterungsstabilisatoren (z.B phenolische Antioxidantien), Metalldesaktivatoren, Verarbeitungshilfsmittel oder dergleichen, verwendet werden.

Als Flammschutzmittel wird der Mischung in an sich herkömmlicher Weise ein Metallhydroxid zugegeben, für welches vorteilhaft Magnesiumhydroxid und/oder im Prinzip auch basisches Magnesiumcarbonat, Zinkborat anwendbar ist.

Das Polypropylen ist mit dispergierter Weichphase zum Beispiel durch EPDM versehen. Durch die Vernetzung zu XEPDM wird die Ölbeständigkeit des aus dieser Mischung hergestellten Produktes gewährleistet.

Die Polypropylen/XEPDM-Mischung soll eine Härte von weniger als 80 Shore A aufweisen.

Es kann der Mischung ausserdem ein Weichmacheröl zugegeben werden, wozu sich beispielsweise Paraffinöl eignet.

Bei einer spezifischen Rezeptur sind folgende konkreten Anteile zu einer Mischung zusammengestellt worden:

| | |
|---|---|
| 28.5 % | Thermoplastisches Elastomer Olefin (Polypropylen/X-EPDM) |
| 65.0 % | Magnesiumhydroxid |
| 05.0 % | Maleinsäureanhydrid Pfropfpolymer (EPR-MAH) |
| 00.5 % | Phenolisches Antioxidant |
| 01.0 % | Farb-MB |

Bei einer anderen spezifischen Rezeptur sind die nachfolgenden Anteile gemischt worden:

| | |
|---|---|
| 23.8 % | Thermoplastisches Elastomer Olefin (Polypropylen/X-PIB) |
| 60.0 % | Magnesiumhydroxid |
| 12.0 % | Maleinsäureanhydrid Terpolymer (EVA-MAH) |
| 06.5 % | Paraffinöl |
| 00.5 % | Phenolisches Antioxidant |
| 00.2 % | Metalldesaktivator |

Die Erfindung ist mit den oben erläuterten Ausführungsbeispielen ausreichend dargetan. Sie liesse sich jedoch noch in anderen Varianten darstellen.

## Patentansprüche

1. Polymermischung für ein strangförmiges Produkt, wobei dieses Polymer als Mischung für die Erzeugung von Elektrokabelkanälen, Schutzrohren, Isolationsschichten elektrischer Leiter bzw. als Elektrokabelmäntel verwendbar und dabei halogenfrei, flammwidrig und ölbeständig ist, **dadurch gekennzeichnet, dass** in der Mischung zumindest ein thermoplastisches Olefin-Elastomer und ein gepfropftes Polyolefin als Verträglichkeitsvermittler oder Haftvermittler enthalten ist, wobei die Mischung zumindest folgende Anteile in Gewichtsprozenten enthält:
| | |
|---|---|
| 20 bis 60 % | Polypropylen/XEPDM |
| 40 bis 70 % | Metallhydroxid |
| 01 bis 30 % | maleinsäureanhydrid oder mit Carboxylsäure gepfropftes Polyolefin oder Polyolefin-Copolymer oder Polyolefin-Maleinsäure-Copolymer. |

2. Mischung nach Anspruch 1, **dadurch gekennzeichnet, dass** zusätzlich wenigstens ein Additiv von 1 bis 10 Gewichtsprozenten, wie zum Beispiel Alterungsstabilisatoren, Metalldesaktivatoren, Verarbeitungshilfsmittel oder dergleichen, beigemischt sind.

3. Mischung nach Anspruch 1 oder 2, **dadurch gekennzeichnet, dass** als Flammschutzmittel ein Metallhydroxid vorgesehen ist, für welches Magnesiumhydroxid und/oder Aluminiumhydroxid oder basisches Magnesiumcarbonat verwendbar ist.

4. Mischung nach einem der vorhergehenden Ansprüche 1 bis 3, **dadurch gekennzeichnet, dass** die Mischung aus Fertigkomponenten gebildet ist, insbesondere aus den Fertigkomponenten der Polymere, der Polypropylen/XEPOM-Mischung und der Füllstoffe.

5. Mischung nach einem der vorhergehenden Ansprüche 1 bis 4, **dadurch gekennzeichnet, dass** das Polypropylen mit dispergierter Weichphase zum Beispiel durch EPDM gebildet ist.

6. Mischung nach einem der vorhergehenden Ansprüche 1 bis 5, **dadurch gekennzeichnet, dass** die PP/XEPDM-Mischung eine Härte von weniger als 80 Shore A aufweist.

7. Mischung nach einem der vorhergehenden Ansprüche 1 bis 6, **dadurch gekenntzeichnet, dass** das Polypropylen mit dispergierter Weichphase durch ölbeständige Polymere, zum Beispiel X-PIB, X-VLDPE, X-NBR oder ähnlichen, gebildet ist.

8. Mischung nach einem der vorhergehenden Ansprüche 1 bis 7, **dadurch gekennzeichnet, dass** ein Weichmacheröl zugegeben ist, zum Beispiel Paraffinöl.

## Claims

1. Polymer composition for a strand formed product, whereby this polymer is usable as a composition for the production of electric cable ducts, protection tubes, insulating layers of electric conductors respectively as electric cable mantles and is thereby free of halogen, non-inflammable and oil-resistant, **characterised in that** the composition contains at least a thermo-plastic olefin-elastomer and a treated polyolefin as consistency connector or adhesion connector, whereby the composition includes at least the following components in weight percentage:
20 to 60 % polypropylene/XEPDM
40 to 70 % metalhydroxid
01 to 30 % maleic anhydride or polyolefin treated with carboxyl acid or polyolefin-copolymer or polyolefin-maleic acid-copolymer.

2. Composition according to claim 1, **characterised in that** additionally at least one additive of 1 to 10 weight percentage is admixed, for example age resistors, metal deactivators, processing auxiliary means or such-like.

3. Composition according to claim 1 or 2, **characterised in that** as fire retarding agent a metallhydroxid is provided, for which magnesiumhydroxid and/or aluminiumhydroxid or basic magnesiumcarbonat is usable.

4. Composition according to anyone of the preceding claims 1 to 3, **characterised in that** the composition is consisting of finished components, in particular from the finished components of the polymers, the polypropylene/XEPDM-composition and the fillers.

5. Composition according to anyone of the preceding claims 1 to 4, **characterised in that** the polypropylene is consisting of dispersed plasticizing phase, for example of EPDM.

6. Composition according to anyone of the preceding claims 1 to 5, **characterised in that** the PP/XEPDM-composition consists a hardness of less than 80 shore A.

7. Composition according to anyone of the preceding claims 1 to 6, **characterised in that** the polypropylene with dispersed plasticizing phase is consisting of oil-resistant polymer, for example X-PIB, X-VLDPE, X-NBR or similar.

8. Composition according to anyone of the preceding claims 1 to 7, **characterised in that** plasticizing oil is added, for example paraffin oil.

## Revendications

1. Mélange polymère pour un produit de type extrudé, ce polymère pouvant être utilisé comme mélange pour la fabrication de canaux de câbles électriques, de tuyaux de protection, de conducteurs électriques à couche isolante ou de gaines de câbles électriques et étant sans halogène, ininflammables et résistants à l'huile, **caractérisé en ce que,** dans le mélange, est contenu au moins un élastomère d'oléfine thermoplastique et une polyoléfine greffée en tant qu'adjuvant de compatibilité ou d'adhérence, le mélange contenant au moins les proportions suivantes en pourcentage en poins :
| | |
|---|---|
| de 20 à 60 % | de polypropylène/XEPDM |
| de 40 à 70 % | d'hydroxyde de métal |
| de 01 à 30 % | d'anhydride d'acide maléique ou d'une polyoléfine greffée par un acide carboxylique ou d'un copolymère de polyoléfine ou d'un copolymère de polyoléfine et d'acide maléique. |

2. Mélange suivant la revendication 1, **caractérisé en ce qu'**il est mélangé, en outre, au moins un additif à raison de 1 à 10 pourcent en poids, comme par exemple des agents de stabilisation vis-à-vis du vieillissement, des désactivateurs de métal, des adjuvants de traitement ou analogues.

3. Mélange suivant la revendication 1 ou 2, **caractérisé en ce qu'**il est prévu, comme agent pare-flammes, un hydroxyde de métal, pour lequel on peut utiliser de l'hydroxyde de magnésium et/ou de l'hydroxyde d'aluminium ou du carbonate de magnésium basique.

4. Mélange suivant l'une des revendications précédentes 1 à 3, **caractérisé en ce que** le mélange est formé de constituants finis, notamment des constituants finis des polymères, du mélange de polypropylène/XEPDM et des charges.

5. Mélange suivant l'une des revendications précédentes 1 à 4, **caractérisé en ce que** le polypropylène est formé en ayant une phase souple dispersée, par exemple, par de l'EPDM.

6. Mélange suivant l'une des revendications précédentes 1 à 5, **caractérisé en ce que** le mélange de PP/XEPDM a une dureté Shore A de moins de 80.

7. Mélange suivant l'une des revendications précédentes 1 à 6, **caractérisé en ce que** le polypropylène est formé en ayant une phase souple dispersée par des polymères résistant à l'huile, par exemple X-PIB, X-VLDPE, X-NBR ou analogues.

8. Mélange suivant l'une des revendications précédentes 1 à 7, **caractérisé en ce qu'**il est ajouté une huile plastifiante, par exemple une huile de paraffine.
